# EUROPEAN PATENT SPECIFICATION

(11) **EP 1 755 409 B1**
(45) Date of publication and mention of the grant of the patent: **31.10.2007**
(21) Application number: 05760315.1
(22) Date of filing: 10.06.2005
(51) Int. Cl.: A23L 1/30

(54) **TOPICAL APPLICATION OF MARINE OILS TO FOODS**
LOKALE APPLIKATION VON MEERÖLEN BEI LEBENSMITTELN
APPLICATION TOPIQUE D'HUILES MARINES AUX ALIMENTS

(30) Priority: 10.06.2004 US 578515 P
(43) Date of publication of application: 28.02.2007
(73) Proprietor: KELLOGG COMPANY, Battle Creek, MI 49016-3599 (US)
(72) Inventor: YANG, Guoshen, Battle Creek, MI 49015 (US); WILLIAMS, Tamila, Richland, MI 49083 (US); URIBE-SAUCEDO, Silvia, St. Joseph, MI 49085 (US); NEUMANN, Paul, Bramhall - Stockport, SK7 IJD (GB)
(74) Representative: Shanks, Andrew
(86) International application number: PCT/US2005/020569
(87) International publication number: WO 2005/122795

(56) References cited:
- EP-A- 0 336 662
- EP-A- 1 388 295
- US-A- 5 139 803
- US-A- 6 020 020
- LAURITZEN D: "FOOD ENRICHMENT WITH MARINE OMEGA-3 FATTY ACIDS" INTERNATIONAL FOOD INGREDIENTS, no. 1/2, 1994, pages 41-44, XP008012422

## Description

### TECHNICAL FIELD

This invention relates generally to topical application of coatings to food items and, more particularly, to topical application of omega-3 fatty acids, especially marine oils, to foods in a manner to achieve enhanced stability of the omega-3 fatty acids.

### BACKGROUND OF THE INVENTION

Long chain polyunsaturated fatty acids are believed to be beneficial to human health. In particular, long chain polyunsaturated omega-3 fatty acids are believed to be especially beneficial. The three that have been of primary interest include: linolenic acid (18:3w-3); eicosapentaenoic acid (EPA) (20:5w-3); and docosahexaenoic acid (DHA) (22:6w-3). The health benefits that have been associated with enhanced consumption of these omega-3 fatty acids include a lowering of serum cholesterol, reduction of blood pressure, reduction in the risk of heart disease, and a reduction in the risk of stroke. In addition, these omega-3 fatty acids are essential to normal neuronal development and their depletion has been associated with neurodegenerative diseases such as Alzheimer's disease. In the human eye and retina the ratio of DHA:EPA is 5:1 and their presence is necessary for normal eye development. The fatty acid DHA is also believed to be essential for optimal cognitive development in infants. Food fortified with DHA is often called "brain food" in Asian countries. Preliminary studies also indicate that long chain polyunsaturated omega-3 fatty acids may play a role in mediating chronic inflammatory assaults and their supplementation for individuals with mild asthma has been documented to reduce the severity of the histamine response in asthmatics.

There are two main sources of beneficial long chain polyunsaturated omega-3 fatty acids. Plants provide a source of linolenic acid. Marine animals and marine plants provide the main source of the other two beneficial omega-3 fatty acids EPA and DHA. In particular, fatty fish such as mackerel and salmon contain high levels of EPA and DHA. In addition, marine microalgae are a source of omega-3 fatty acids, predominantly DHA. The beneficial effects of the omega-3 fatty acids, especially EPA and DHA, require relatively large amounts of the omega-3 fatty acids making it impractical to obtain the recommended daily amount merely by consuming fish. Thus, both have been made available in caplet form. Consumers do not generally enjoy consuming the caplets in part because they are large and also because the caplets can develop a fishy rancid type odor rapidly. Prior attempts to add DHA and/or EPA directly to shelf stable longer shelf life foods have been unsuccessful because they are very unstable and rapidly give rise to a fishy odor and taste upon oxidation, there by making the food unpalatable. It is believed that DHA and EPA are particularly unstable in the presence of water and heat, therefore their use in foods has been complicated and largely unsuccessful.

It would be desirable to develop a method to topically apply DHA and/or EPA to a variety of foods in a manner that largely prevents their oxidation during application and subsequent to application thereby rendering a palatable food product with enhanced health benefits.

### SUMMARY OF THE INVENTION

In general terms, this invention provides a method of topically applying DHA and/or EPA to foods comprising the steps of: melting a carrier oil, said carrier oil having a solid fat content (SFC) of at least 40 weight % at 20° C; adding a marine oil to the melted carrier oil to form an oil mixture; and topically applying the oil mixture to a prepared food product. The present invention also includes a food product made by the method. Preferably, the oil mixture further includes one or more of the known anti-oxidants such as: tocopherols; ascorbic acid; ascorbyl palmitate; rosemary extract; butylated hydroxytoluene (BHT); butylated hydroxyanisol (BHA); or tert-butyl-1,4-benzenediol (TBHQ). In addition, it is preferable to include one or more flavor agents in the oil mixture.

These and other features and advantages of this invention will become more apparent to those skilled in the art from the detailed description of a preferred embodiment. The drawing that accompanies the detailed description is described below.

### BRIEF DESCRIPTION OF THE DRAWINGS

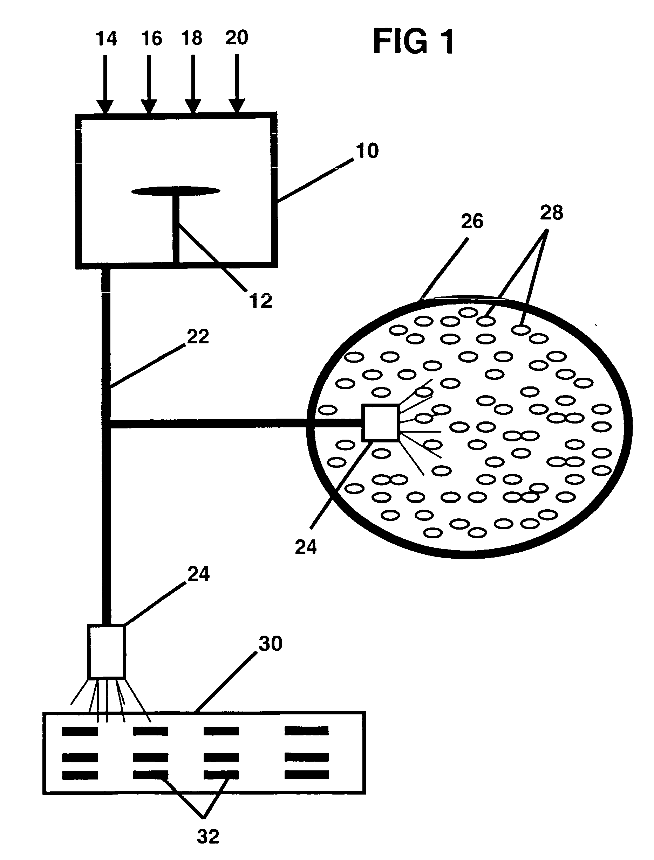

Figure 1 is a schematic drawing of one embodiment of the present invention.

### DETAILED DESCRIPTION OF A PREFERRED EMBODIMENT

As discussed above many of the health benefits of DHA and EPA are known, thus there has long been a desire to find methods for increasing the consumption of these fatty acids by consumers. One of the main drawbacks in increasing their consumption has been the lack of stability of DHA and EPA, especially upon storage. Both DHA and EPA rapidly oxidize and develop a fishy taste and aroma that consumers find unpalatable. Thus, a first step in increasing their consumption will be to develop an effective and simple method for enhancing their stability and resistance to oxidation, particularly in foods. The problem of stability occurs whether the source of the DHA or EPA is from fish or from microalgae. In the present specification and claims the percentage of ingredients in a blend are in terms of weight percent unless noted otherwise.

As discussed above, in the present invention the source of the DHA or EPA can either be from fish or from microalgae. There are several microalgae derived sources of DHA and EPA available. One source is Martek Biosciences Corporation, Columbia, MD, USA. In particular, the Martek microalgae derived DHA/EPA blend is designated as DHASCO®-S oil. This blend contains at least 350 milligrams of DHA and approximately 13 milligrams of EPA per gram of the blend. The blend further includes a small amount of tocopherols, ascorbyl palmitate, and a rosemary extract. A second source of microalgae derived DHA is Nutrinova Nutrition Specialties and Food Ingredients, DE. The Nutrinova source is designated as Nutrinova DHA CL marine oil and contains 380 milligrams of DHA per gram of blend. A third source of DHA/EPA is Maritex, DK. Their fish derived product is designated as Maritex 43-10 and contains 120 milligrams of DHA and 80 milligrams of EPA per gram of blend. In the present specification and claims the term marine oil refers to an oil derived from a marine plant or fish wherein the oil contains DHA, EPA, or a mixture of DHA and EPA.

In initial tests the marine oils alone were topically applied to prepared ready to eat cereal flakes. The treated flakes rapidly developed a fishy aroma and taste indicating that application of the oils directly to foods was not a suitable route. The taste and aroma began to develop during application and got progressively more intense. Because DHA and EPA are fatty acids that are soluble in other oils the present inventors chose to investigate the use of other oils as carriers to stabilize and apply the marine oil. In initial investigations the marine oils were combined with carrier oils that are liquid at room temperature, specifically sunflower oil or rice bran oil. The marine oil was blended with the carrier oil at a level of 5.7% and then the oil mixture was topically applied to prepared ready to eat cereal flakes at a level of 5%. Again, the treated flakes rapidly developed a fishy aroma and taste during their preparation and afterward.

The present inventors then chose to test a series of carrier oils having varied solid fat contents, none of these carrier oils are liquid at room temperature, unlike the sunflower or rice bran oil which have a negligible solid fat content. The physical characteristics, provided by the manufacturers, of the carrier oils utilized are given in Table 1 below.

**Table 1**

| Characteristic | Palm-1 | Palm-2 | Palm-3 | Palm kernel oil | Sunflower oil | Rice bran oil |
|---|---|---|---|---|---|---|
| SFC @ 10° C | N.D. | 74-78 | N.D. | N.D. | N.D. | N.D. |
| SFC @ 20° C | 22-29 | 52-58 | 36 | 73-81 | <2 | <5 |
| SFC @ 30° C | 6-11 | 13-18 | 14 | N.D. | 0 | 0 |
| SFC @ 35° C | 0-6 | 5-9 | 8.5 | 5 | 0 | 0 |
| SFC @ 40° C | N.D. | 2-5 | 4.95 | N.D. | 0 | 0 |
| Saturated fat % | 52 | 60 | 52 | 92 | 7 | 22 |
| Monounsaturared fat % | 37 | 33 | 37 | 8 | 65 | 39 |
| Polyunsaturated fat % | 11 | 3 | 11 | 0 | 28 | 38 |
| Mettler drop point (°C) | 40 | 40-42 | 40-42 | 35 | N.D. | N.D. |

Palm-1 is a blend of palm oils obtained from Loders Croklaan and designated Biscuitine 200. Palm-2 is a blend of palm oils obtained from Pura Foods Limited and is designated as Pura LT1. Palm-3 is a blend of palm oils obtained from Wilmar Trading Pte Ltd, Singapore. The Palm kernel oil was obtained from Loders Croklaan and is designated as Paramount B. The sunflower oil was a mid oleic oil obtainable from Cargill or Archer Daniels Midland Company. The rice bran oil was obtained from Oil Seeds International. As noted above SFC refers to the solid fat content on a % basis as is understood by those of ordinary skill in the art. The Mettler drop point is a measure of the melting point of an oil.

A series of blends of 5.8 % DHASCO®-S oil, 0.3% of the anti-oxidant blend Man-1, 0.02% citric acid solution and 93.88% of a selected carrier oil were prepared. The anti-oxidant blend Man-1 was obtained from Kalsec Inc., Kalamazoo, Michigan, USA and is also know as Duralox®. It is a pre-blended mixture of tocopherols and ascorbic acid. The citric acid is included because it is a known active metal chelator, particularly of iron and zinc in foods. These metals have been implicated in the general oxidative damage of a variety of oils. The citric acid is initially prepared by dissolving it in water at a weight ratio of 1:1. As known to those of ordinary skill in the art citric acid is typically used at levels of from 25 to 200 ppm based on the total oil solution and more preferably at a level of from 25 to 75 ppm. The oxidative stability index (OSI) of each blend was determined at 110° C using the protocol AOCS Cd 12b-92 using a rancimat 743 as known to those of ordinary skill in the art. The principal of the test is to heat an oil sample under constant aeration and trapping any volatiles formed due to oxidation in water. The rate of formation is monitored by measuring electro conductivity. This test measures the time to develop rancidity of an oil or a blend of oils. The results are presented in Table 2 below.

**Table 2**

| Carrier oil in the oil mixture | OSI at 110° C, hours |
|---|---|
| Sunflower oil | 4.4 |
| Rice bran oil | 9.9 |
| Palm-1 | 22.5 |
| Palm-2 | 35.3 |
| Palm kernel oil | 150 |

The results clearly demonstrate that using either Palm-2 or palm kernel oil as the carrier oil dramatically enhances the stability of the marine oil compared to the other tested carrier oils. It is believed that the much higher SFC at 20° C of these two carrier oils compared to the other tested carrier oils is a significant factor in the enhanced stability. It is postulated that the higher SFC profile of these carrier oils allows them to trap the marine oil in a state that enhances its stability. Other examples of carrier oils having SFC at 20° C of 40% or greater include: coconut oil, lard, beef tallow, partially hydrogenated soybean oil, partially hydrogenated canola oil, partially hydrogenated sunflower oil, partially hydrogenated cottonseed oil, hydrogenated soybean oil, hydrogenated canola oil, hydrogenated sunflower oil, hydrogenated cottonseed oil, interesterified partially hydrogenated soybean oil, interesterified partially hydrogenated canola oil, interesterified partially hydrogenated sunflower oil, interesterified partially hydrogenated cottonseed oil, interesterified hydrogenated soybean oil, interesterified hydrogenated canola oil, interesterified hydrogenated sunflower oil, interesterified hydrogenated cottonseed oil. In another set of experiments three blends were prepared comprising Palm-2 as the carrier oil, Man-1 at 0.3%, citric acid at 0.01% and then equivalent omega-3 fatty acid levels from either DHASCO®-S marine oil, Nutrinova DHA CL marine oil, or Maritex 43-10 marine oil. The OSI at 110° C of each blend was then determined. The results are as follows: DHASCO®-S marine oil had an OSI of 35.3 hours, Nutrinova DHA CL marine oil had an OSI of 35.45 hours, and Maritex 43-10 marine oil had an OSI of 49.4 hours. These results show that the stability is not dependent on the source of the marine oil. The carrier oil system of the present invention is capable of stabilizing marine oil from microalgae and from fish.

In another experiment the effect of the level of Man-1 on the OSI at 110° C of a blend of 5.8% DHASCO®-S oil, 0.01% citric acid, and Palm-2 carrier oil was determined. The results are presented below in Table 3 and are expressed as the average of three trials.

**Table 3**

| % of Man-1 | OSI at 110° C, hours |
|---|---|
| 0 | 13.4 |
| 0.15 | 25.3 |
| 0.3 | 36.1 |
| 0.6 | 22.5 |

The results demonstrate that the effectiveness peaks at a level of 0.3% Man-1 in this particular blend. Another anti-oxidant that was tested and found to be as effective as Man-1 was Grindox 497 available from Danisco. This is a blend of 10% mixed natural tocopherols, 10% ascorbyl pamitate, and 80% carrier oil, which is a blend of soybean oil and lecithin. Thus, it is believed that effective anti-oxidant protection can be achieved using any of the known anti-oxidants at levels of from 0.005 to 1.0%. Preferred anti-oxidants include tocopherols, ascorbic acid, ascorbyl palmitate, rosemary or mixtures thereof. Other anti-oxidants that can also be used alone or in combination in the present invention include: butylated hydroxytoluene (BHT); butylated hydroxyanisol (BHA); and tert-butyl-1,4-benzenediol (TBHQ). The maximal usable levels of these other anti-oxidants are regulated by the government and are known to those of ordinary skill in the art. The combination of the anti-oxidant Man-1 and the Palm-2 is synergistic in enhancing the OSI at 110° C as demonstrated by the following experiment. The OSI at 110° C was determined for the following: DHASCO®-S oil alone; DHASCO®-S oil plus 0.3% Man-1; DHASCO®-S oil plus Palm-2 carrier oil; and DHASCO®-S oil plus Man-1 and Palm-2. The respective OSIs were as follows: 3.6 hours; 4.85 hours; 13.4 hours; and 35 hours. Clearly, the OSI with both Palm-2 and Man-1 is greater than the effect of either alone indicating a synergistic action.

The OSI of a particular blend of marine oil with carrier oil is also determined by the level of the marine oil in the carrier oil. In a series of experiments the level of DHASCO®-S oil in a mixture of 0.3% Man-1, 0.01% citric acid and Palm-2 carrier oil was varied. The results are presented below in Table 4 as the average of from 2 to 5 trials.

**Table 4**

| % DHASCO®-S oil | OSI at 110° C, hours |
|---|---|
| 0 | 66.95 |
| 5 | 37.3 |
| 5.7 | 35.2 |
| 7.5 | 30.65 |
| 10 | 23.9 |
| 15 | 18.2 |
| 20 | 13.6 |
| 30 | 9.55 |
| 50 | 6.9 |
| 70 | 5.85 |
| 100 | 4.85 |

The results demonstrate an inflection point at approximately 10 % marine oil added to the carrier Palm-2. Beyond this level adding more marine oil causes a rapid loss in OSI that eventually levels off at a very low level. Thus, there are limits to the protective effect of a given amount of the Palm-2 and Man-1 on the marine oil in terms of OSI.

Based on the results presented above a general formulation and process was developed for testing of marine oil stability after its application to food products using the system described in the present invention. The base marine oil formulation used for this testing is given in Table 5 below.

**Table 5**

| Ingredient | % by weight |
|---|---|
| Carrier oil | 93.88 |
| Man-1 | 0.3 |
| Citric acid solution (1:1 with water) | 0.02 |
| Marine oil | 5.8 |

Referring now to Figure 1, a general procedure for the present invention follows. A mix tank 10 is heated to a temperature sufficient to melt the carrier oil having a SFC of at least 40% at 20° C of choice, generally a temperature of from 40 to 50° C. The carrier oil is added to the mix tank 10 and agitation is begun using a mixer 12. Once the carrier oil has been melted the citric acid is dissolved in water at a weight ratio of 1:1 and added to the mix tank 10 through an addition line 16. The anti-oxidants are then added to the mix tank 10 through an addition line 18. The marine oil is added to the mix tank 10 containing the carrier oil, citric acid and anti-oxidants through an addition line 14. As described below, flavors and other additives can be added to the mix tank 10 through an addition line 20. Once all of the components are added and completely mixed the oil mixture is passed out of mix tank 10 through a heated outlet line 22 to an application apparatus. In Figure 1 line 22 is connected to a spray nozzle 24 for application of the oil mixture. As known to those of ordinary skill in the art many other application methods for topical application would also work including without limitation: a waterfall applicator, an enrobing system, or a dipping system. The spray nozzle 24 can be of any design and is well known in the art. In one embodiment shown in Figure 1, the nozzle 24 is directed into a food tumbler 26. In the tumbler 26 food pieces 28, such as cereal pieces, snacking foods, or other savories, are tumbled at room temperature, approximately 20 to 25° C, while the oil mixture is sprayed onto the food pieces 28. As is known in the art, the tumbler 26 can either be a batch tumbler or a continuous tumbler, wherein the food pieces 28 are moved though the tumbler 26 as it rotates. In another embodiment shown in Figure 1, the oil mixture is sent to one or more spray nozzles 24 positioned over a conveyor 30 containing food pieces 32. The oil mixture is applied to the food pieces 32 as the conveyor 30 passes them under the nozzle 24. The food pieces 32 can be of any sort including cereals, ready to eat cereals, cereal bars, cookies, crackers, pastries, toaster pastries, waffles, pancakes, baked goods, snacking items and any other foods. In both embodiments the items to be sprayed are fully cooked prior to application of the oil mixture.

Using the formulation given in Table 5 above with DHASCO®-S oil as the marine oil source the stability of an oil mixture using either Palm-2, Palm-3, or palm kernel oil as the carrier oil was tested. Corn Flakes® were coated at a level of 5% of the oil mixture, cooled and then tested for taste and aroma immediately. The rest of each sample was divided into a series of typical cereal storage bags that were then sealed and stored for a series of time periods. The storage was either at room temperature of 70° C and 35% relative humidity or under hot room conditions at 100° C and 35% relative humidity. The goal was to detect when the sprayed food first developed a fishy taste and/or aroma indicating oxidation of the marine oils. The samples stored at room temperature were tested at time 0, 1 month, 2 months, 3 months, 4 months, 5 months, 6 months, 7 months, and 8 months. The samples stored at 100° C were tested at time 0, 2 weeks, 4 weeks, 6 weeks, 8 weeks, 10 weeks, and 12 weeks. Samples prepared in Palm-3 as a carrier oil developed a fishy taste and aroma within only 3 weeks at room temperature, thus none of the hot room samples were tested. The samples prepared in Palm-2 were stable at room temperature for 4 months and for 8 weeks in the hot room. The samples prepared in palm kernel oil were stable for 4 months at room temperature and for 12 weeks in the hot room. In a follow up test, samples were prepared using the formulation of Table 5 wherein the carrier oil was Palm-2, but the source of marine oil was either Maritex 43-10 or Nutrinova DHA CL. Samples of Corn Flakes® were treated as described above and then tested for stability as indicated by a lack of fishy taste and/or aroma under the room temperature conditions or the hot room conditions as described above. Both of these other marine oil sources were.also stable at room temperature for 4 months and under hot room conditions for 8 weeks. These results again demonstrate that the method of the present invention is not dependent on the source of the marine oil in that it works just as effectively on marine oil derived from fish as marine oil derived from microalgae. The results also show the importance of the SFC at 20° C of the carrier oil in the system. Using palm-3, which has a SFC at 20° C of 36% was ineffective. The food developed a fishy taste and aroma within only 3 weeks at room temperature. By way of contrast, Palm-2 which has a SFC 20° C of 52-58% was very effective at stabilizing the marine oil on the food. Even more stability was demonstrated by using a palm kernel oil which has a SFC 20° C of 73-81%. It is believed that the carrier oil must have a SFC at 20° C of 40% or greater to be effective in the present system. It is postulated that carrier oils with SFC at 20° C of 40% or higher stabilize the marine oil by trapping the marine oil in their crystalline structure as they cool and resolidify after application to the food. As would be understood by one of ordinary skill in the art blends of these beneficial carrier oils could also be used. Carrier oils with a SFC at 20° C of less than 40% do not seem able to protect the marine oils and it maybe because they are not able to form the proper crystalline matrix. Thus, it is also believed that the protective effect of a carrier oil having SFC at 20° C of 40% or greater can also be enhanced by controlled cooling of the food after application of the oil mixture to form the crystalline structure and to cause the resolidification more quickly.

Since a typical serving size of Corn Flakes® is approximately 30 grams the inventors chose a final DHA level of 30 milligrams per serving. Thus using the formula in Table 5 the oil mixture was applied at a level of about 5% when the marine oil source is the Martek product and 30 mg is the desired level. It was also postulated that the addition of small amounts of a flavor component might affect the stability of the marine oil in food products. In addition, the results above suggest that the level of anti-oxidant and marine oil in the oil mixture may influence the stability of the marine oil on foods. To test these parameters a response surface design test with three factors was developed and tested. The test food was Corn Flakes®, the test carrier oil was Palm-2, the test marine oil was DHASCO®-S oil, the test anti-oxidant was Man-1, and the test flavor was a caramel malt flavor # 27628 from David Michael & Co., Inc. A series of oil mixtures were prepared each one of which varied the level of one of the tested ingredients. These oil mixtures were applied to Corn Flakes® at a level of 30 mg of DHA per 30 grams of cereal and then the stability as determined by the absence of a fishy taste and/or aroma was monitored under room temperature conditions or hot room conditions, as described above, for periods of time. The level of the marine oil was either 5.7 %, 10%, or 15% based on total the weight of the oil mixture. The level of the anti-oxidant Man-1 was either 0.15%, 0.3%, or 0.6% based on the weight of the oil mixture. The flavor was added at levels of either 0.0%, 0.075%, or 0.15% based on the weight of the finished food. Several general trends emerged from the results. The level of marine oil has a negative effect on stability meaning that as the level of marine oil in the oil mixture is increased and the other components are kept constant the time to develop a fishy taste and/or aroma shortens. The level of anti-oxidant has a positive effect on the stability. As the level of anti-oxidant is increased the stability increases. The level of flavor also has a positive effect on the stability, as its level increases the time to develop a fishy taste and/or aroma also increases. Thus, using a level of 5.7% marine oil, 0.15% flavor, and 0.6% anti-oxidant the food was stable for at least 6 months at room temperature and for at least 12 weeks in the hot room conditions. Using a level of 5.7% marine oil, 0.15% anti-oxidant, and no flavor the food was stable for at least 2 months at room temperature and 8 weeks in the hot room. Using 15% marine oil, 0.6% anti-oxidant, and 0.15% flavor the food was stable for at least 4 months at room temperature and at least 12 weeks in the hot room. Using 15 % marine oil, 0.15% anti-oxidant, and 0.0% flavor the food was stable for at least 2 months at room temperature and for at least 2 weeks in the hot room. The values for 10% marine oil fell between those for 5.7 % and 15%. Thus, food prepared using the present invention can be stabilized at room temperature for periods of from at least 2 months to at least 6 months depending on the conditions chosen and for periods of from at least 2 weeks to at least 12 weeks in the hot room. Many other flavors other than the tested one can be utilized, these are known to those of ordinary skill in the art and their usable level generally ranges from 0.05 to 1.0%. In summary, the best stability was achieved when the marine oil is at a level of about 5.7%, anti-oxidant is 0.6% or more and flavor is added at a level of 0.15% or more. The marine oil can be utilized at levels of from about 2% to about 20% depending on the desired application.

The foregoing invention has been described in accordance with the relevant legal standards, thus the description is exemplary rather than limiting in nature. Accordingly, the scope of legal protection afforded this invention can only be determined by studying the following claims.

## Claims

1. A method of applying marine oil to a food product comprising the steps of:
a) melting a carrier oil, said carrier oil having a solid fat content at 20° C of at least 40%;
b) adding a marine oil comprising DHA and an anti-oxidant to the melted carrier oil to form an oil mixture; and
c) topically applying the oil mixture to a prepared food product.

2. The method of claim 1 wherein step a) comprises melting a carrier oil having a solid fat content at 20° C of at least 50%.

3. The method of claim 1 wherein step b) comprises adding the marine oil at a level of from 2 to 20% to the melted carrier oil.

4. The method of claim 3 wherein step b) comprises adding the marine oil at a level of from 5 to 15% to the melted carrier oil.

5. The method of claim 1 wherein step b) comprises adding the anti-oxidant at a level of from 0.005 to 1.0% to the melted carrier oil.

6. The method of claim 1 wherein step b) further comprises adding citric acid to the melted carrier oil at level of from 25 to 200 ppm based on the oil mixture.

7. The method of claim 1 wherein step b) further comprises adding a flavor to the melted carrier oil at a level of from 0.05 to 1.0% based on the weight of the food product.

8. The method of claim 1 where in step c) comprises topically applying the oil mixture to a prepared food product comprising at least one of a cereal, a ready to eat cereal, a cereal bar, a cookie, a cracker, a pastry, a toaster pastry, a waffle, a pancake, a baked good, or a snacking item.

9. The method of claim 1 wherein step c) comprises topically applying from 15 to 100 milligrams of DHA per serving of the food product.

10. The method of claim 9 wherein step c) comprises topically applying from 20 to 80 milligrams of DHA per serving of the food product.

11. The method of claim 1 wherein step c) comprises topically applying the oil mixture by one of a spray nozzle, a waterfall, an enrobing, and a dipping.

12. The method of claim 1 wherein step a) comprises melting a carrier oil comprising palm oil blend, palm kernel oil, coconut oil, lard, beef tallow, partially hydrogenated soybean oil, partially hydrogenated canola oil, partially hydrogenated sunflower oil, partially hydrogenated cottonseed oil, hydrogenated soybean oil, hydrogenated canola oil, hydrogenated sunflower oil, hydrogenated cottonseed oil, interesterified partially hydrogenated soybean oil, interesterified partially hydrogenated canola oil, interesterified partially hydrogenated sunflower oil, interesterified partially hydrogenated cottonseed oil, interesterified hydrogenated soybean oil, interesterified hydrogenated canola oil, interesterified hydrogenated sunflower oil, interesterified hydrogenated cottonseed oil, or mixtures thereof.

13. The method of claim 1 wherein step b) comprises adding an anti-oxidant comprising at least one of a tocopherol, rosemary, ascorbic acid, ascorbyl palmitate, butylated hydroxytoluene (BHT), butylated hydroxyanisol (BHA), tert-butyl-1,4-benzenediol (TBHQ), or mixtures thereof.

14. A food product prepared according to the process of claim 1.

15. A prepared food product comprising a topical coating of a oil mixture wherein said oil mixture comprises a carrier oil having a solid fat content at 20° C of at least 40%, a marine oil comprising DHA, and an anti-oxidant.

16. The prepared food product of claim 15 wherein the carrier oil has a solid fat content at 20° C of at least 50%.

17. The prepared food product of claim 15 wherein the carrier oil comprises palm oil blend, palm kernel oil, coconut oil, lard, beef tallow, partially hydrogenated soybean oil, partially hydrogenated canola oil, partially hydrogenated sunflower oil, partially hydrogenated cottonseed oil, hydrogenated soybean oil, hydrogenated canola oil, hydrogenated sunflower oil, hydrogenated cottonseed oil, interesterified partially hydrogenated soybean oil, interesterified partially hydrogenated canola oil, interesterified partially hydrogenated sunflower oil, interesterified partially hydrogenated cottonseed oil, interesterified hydrogenated soybean oil, interesterified hydrogenated canola oil, interesterified hydrogenated sunflower oil, interesterified hydrogenated cottonseed oil, or mixtures thereof.

18. The prepared food product of claim 15 wherein the marine oil is present at a level of from 2 to 20 % in the oil mixture.

19. The prepared food product of claim 18 wherein the marine oil is present at a level of from 5 to 15% in the oil mixture.

20. The prepared food product of claim 15 wherein the anti-oxidant is present at a level of from 0.005 to 1.0% in the oil mixture.

21. The prepared food product of claim 15 wherein the anti-oxidant comprises at least one of a tocopherol, rosemary, ascorbic acid, ascorbyl palmitate, butylated hydroxytoluene (BHT), butylated hydroxyanisol (BHA), tert-butyl-1,4-benzenediol (TBHQ), or mixtures thereof.

22. The prepared food product of claim 15 wherein the oil mixture further comprises from 25 to 200 ppm of citric acid.

23. The prepared food product of claim 15 wherein the oil mixture further comprises from 0.05 to 1.0% by weight based on the weight of the food product of flavor.

24. The prepared food product of claim 15 wherein the oil mixture is applied to the food product at a level sufficient to provide from 20 to 100 milligrams of DHA per serving of the food product.

25. The prepared food product of claim 15 wherein the food product comprises at least one of a cereal, a cereal bar, a ready to eat cereal, a cookie, a cracker, a pastry, a toaster pastry, a waffle, a pancake, a baked good, or a snacking item.

26. The prepared food product of claim 15 wherein the food product with the topical coating is room temperature stable for at least 4 months.

27. An oil mixture comprising a carrier oil having a solids fat content at 20° C of at least 40% , a marine oil, and an anti-oxidant.

28. The oil mixture of claim 27 wherein the carrier oil has solid fat content of at least 50%.

29. The oil mixture of claim 27 wherein the marine oil is present at a level of from 2 to 20 %.

30. The oil mixture of claim 27 wherein the anti-oxidant is present at a level of from 0.005 to 1.0%.

31. The oil mixture of claim 27 wherein the anti-oxidant comprises at least one of a tocopherol, rosemary, ascorbic acid, ascorbyl palmitate, butylated hydroxytoluene (BHT), butylated hydroxyanisol (BHA), tert-butyl-1,4-benzenediol (TBHQ), or mixtures thereof.

32. The oil mixture of claim 27 further comprising citric acid at a level of from 25 to 200 ppm.

33. The oil mixture of claim 27 further comprising at least one flavor at a level of from 0.05 to 1.0%.

34. The oil mixture of claim 27 wherein the oil mixture is stable at room temperature for at least 4 months.

35. The oil mixture of claim 27 wherein the carrier oil comprises palm blend, palm kernel oil, coconut oil, lard, beef tallow, partially hydrogenated soybean oil, partially hydrogenated canola oil, partially hydrogenated sunflower oil, partially hydrogenated cottonseed oil, hydrogenated soybean oil, hydrogenated canola oil, hydrogenated sunflower oil, hydrogenated cottonseed oil, interesterified partially hydrogenated soybean oil, interesterified partially hydrogenated canola oil, interesterified partially hydrogenated sunflower oil, interesterified partially hydrogenated cottonseed oil, interesterified hydrogenated soybean oil, interesterified hydrogenated canola oil, interesterified hydrogenated sunflower oil, interesterified hydrogenated cottonseed oil.

## Patentansprüche

1. Verfahren zur Anwendung von Meeröl bei einem Lebensmittel, welches die Schritte umfasst:
a) Schmelzen eines Trägeröles, wobei das Trägeröl einen Festfettgehalt bei 20°C von mindestens 40% hat;
b) Hinzufügen eines Meeröls, welches DHA und ein Antioxidationsmittel umfasst, zu dem geschmolzenen Trägeröl, um eine Ölmischung zu bilden; und
c) lokale Applikation der Ölmischung bei einem zubereiteten Lebensmittelprodukt.

2. Das Verfahren nach Anspruch 1, worin Schritt a) das Schmelzen eines Trägeröls mit einem Festfettgehalt bei 20°C von mindestens 50% umfasst.

3. Das Verfahren nach Anspruch 1, worin der Schritt b) das Hinzufügen des Meeröls umfasst in einer Konzentration von 2 bis 20% zum geschmolzenen Trägeröl.

4. Das Verfahren nach Anspruch 3, worin der Schritt b) das Hinzufügen des Meeröls umfasst in einer Konzentration von 5 bis 15% zum geschmolzenen Trägeröl.

5. Das Verfahren nach Anspruch 1, worin der Schritt b) das Hinzufügen des Antioxidationsmittel umfasst in einer Konzentration von 0,005 bis 1,0% zum geschmolzenen Trägeröl.

6. Das Verfahren nach Anspruch 1, worin der Schritt b) weiterhin das Hinzufügen von Zitronensäure zum geschmolzenen Trägeröl umfasst in einer Konzentration von 25 bis 200 ppm bezogen auf die Ölmischung.

7. Das Verfahren nach Anspruch 1, worin Schritt b) weiterhin das Hinzufügen eines Geschmacksstoffs zum geschmolzenen Trägeröl umfasst in einer Konzentration von 0,05 bis 1%, bezogen auf das Gewicht des Lebensmittelproduktes.

8. Das Verfahren nach Anspruch 1, worin der Schritt c) die lokale Anwendung der Ölmischung bei einem zubereiteten Lebensmittelprodukt umfasst, welches mindestens eines von einem Getreideflockengericht, einem essfertigen Getreideflockengericht, einem Getreideriegel, einem Keks, einem Cracker, einem Gebäckstück, einem Toastergebäck, einer Waffel, einem Pfannkuchen, einer Backware oder einem Snack umfasst.

9. Das Verfahren nach Anspruch 1, worin Schritt c) die lokale Anwendung von 15 bis 100 Milligramm DHA pro Portion des Lebensmittelproduktes umfasst.

10. Das Verfahren nach Anspruch 9, worin Schritt c) die lokale Anwendung von 20 bis 80 Milligramm DHA pro Portion des Lebensmittelproduktes umfasst.

11. Das Verfahren nach Anspruch 1, worin Schritt c) die lokale Anwendung der Ölmischung umfasst durch eines von einer Sprühdüse, einer Kaskade, einer Umhüllung und Eintauchen.

12. Das Verfahren nach Anspruch 1, worin der Schritt a) das Schmelzen eines Trägeröls umfasst, welches Palmölmischung, Palmkernöl, Kokosnussöl, Schweinefett, Rindertalg, teilhydriertes Sojabohnenöl, teilhydriertes Rapsöl, teilhydriertes Sonnenblumenöl, teilhydriertes Baumwollsamenöl, hydriertes Sojabohnenöl, hydriertes Rapsöl, hydriertes Sonnenblumenöl, hydriertes Baumwollsamenöl, interesterifiziertes teilhydriertes Sojabohnenöl, interesterifiziertes teilhydriertes Rapsöl, interesterifiziertes teilhydriertes Sonnenblumenöl, interesterifiziertes teilhydriertes Baumwollsamenöl, interesterifiziertes hydriertes Sojabohnenöl, interesterifiziertes hydriertes Rapsöl, interesterifiziertes hydriertes Sonnenblumenöl, interesterifiziertes hydriertes Baumwollsamenöl oder Mischungen davon umfasst.

13. Das Verfahren nach Anspruch 1, worin Schritt b) das Hinzufügen eines Antioxidationsmittel umfasst, welches mindestens eines von Tocopherol, Rosmarin, Ascorbinsäure, Ascorbylpalmitat, Butylhydroxytoluol (BHT), Butylhydroxyanisol (BHA), tert.-Butyl-1,4-benzoldiol (TBHQ) oder Mischungen davon umfasst.

14. Lebensmittelprodukt, bereitet nach dem Verfahren von Anspruch 1.

15. Zubereitetes Lebensmittelprodukt, welches eine lokale Beschichtung mit einer Ölmischung umfasst, worin die Ölmischung ein Trägeröl mit einem Festfettgehalt bei 20°C von mindestens 40%, ein Meeröl, umfassend DHA, und ein Antioxidationsmittel umfasst.

16. Das zubereitete Lebensmittelprodukt nach Anspruch 15, worin das Trägeröl einen Festfettgehalt bei 20°C von mindestens 50% hat.

17. Das bereitete Lebensmittelprodukt nach Anspruch 15, worin das Trägeröl eine Palmölmischung, Palmkernöl, Kokosnussöl, Schweinefett, Rindertalg, teilhydriertes Sojabohnenöl, teilhydriertes Rapsöl, teilhydriertes Sonnenblumenöl, teilhydriertes Baumwollsamenöl, hydriertes Sojabohnenöl, hydriertes Rapsöl, hydriertes Sonnenblumenöl, hydriertes Baumwollsamenöl, interesterifiziertes teilhydriertes Sojabohnenöl, interesterifiziertes teilhydriertes Rapsöl, interesterifiziertes teilhydriertes Sonnenblumenöl, interesterifiziertes teilhydriertes Baumwollsamenöl, interesterifiziertes hydriertes Sojabohnenöl, interesterifiziertes hydriertes Rapsöl, interesterifiziertes hydriertes Sonnenblumenöl, interesterifiziertes hydriertes Baumwollsamenöl oder Mischungen davon umfasst.

18. Das zubereitete Lebensmittelprodukt nach Anspruch 15, worin das Meeröl in einer Konzentration von 2 bis 20% in der Ölmischung vorhanden ist.

19. Das zubereitete Lebensmittelprodukt nach Anspruch 18, worin das Meeröl in einer Konzentration von 5 bis 15 % in der Ölmischung vorhanden ist.

20. Das zubereitete Lebensmittelprodukt nach Anspruch 15, worin das Antioxidationsmittel in einer Konzentration von 0,005 bis 1,0% in der Ölmischung vorhanden ist.

21. Das zubereitete Lebensmittelprodukt nach Anspruch 15, worin das Antioxidationsmittel mindestens eines von Tocopherol, Rosmarin, Ascorbinsäure, Ascorbylpalmitat, Butylhydroxytoluol (BHT), Butylhydroxyanisol (BHA), tert.-Butyl-1,4-benzoldiol (TBHQ) oder Mischungen davon umfasst.

22. Das zubereitete Lebensmittelprodukt nach Anspruch 15, worin die Ölmischung weiterhin 25 bis 200 ppm Zitronensäure umfasst.

23. Das zubereitete Lebensmittelprodukt nach Anspruch 15, worin die Ölmischung weiterhin 0,05 bis 1,0 Gew.-% Geschmacksstoff, bezogen auf das Gewicht des Lebensmittelproduktes, umfasst.

24. Das zubereitete Lebensmittelprodukt nach Anspruch 15, worin die Ölmischung dem Lebensmittelprodukt zugeführt wird in einer Konzentration, die ausreicht, um 20 bis 100 Milligramm DHA pro Portion des Lebensmittelproduktes bereitzustellen.

25. Das zubereitete Lebensmittelprodukt nach Anspruch 15, worin das Lebensmittelprodukt mindestens eines von einem Getreideflockengericht, einem Getreideriegel, einem essfertigen Getreideflockengericht, einem Keks, einem Cracker, einem Gebäckstück, einem Toastergebäck, einer Waffel, einem Pfannkuchen, einer Backware oder einem Snack umfasst.

26. Das zubereitete Lebensmittelprodukt nach Anspruch 15, worin das Lebensmittelprodukt mit der lokalen Beschichtung bei Raumtemperatur mindestens für 4 Monate haltbar ist.

27. Ölmischung, welche ein Trägeröl mit einem Festfettgehalt bei 20°C von mindestens 40%, ein Meeröl und ein Antioxidationsmittel umfasst.

28. Die Ölmischung nach Anspruch 27, worin das Trägeröl einen Festfettgehalt von mindestens 50% hat.

29. Die Ölmischung nach Anspruch 27, worin das Meeröl in einer Konzentration von 2 bis 20% vorhanden ist.

30. Die Ölmischung nach Anspruch 27, worin das Antioxidationsmittel in einer Konzentration von 0,005 bis 1,0% vorhanden ist.

31. Die Ölmischung nach Anspruch 27, worin das Antioxidationsmittel mindestens eines von Tocopherol, Rosmarin, Ascorbinsäure, Ascorbylpalmitat, Butylhydroxytoluol (BHT), Butylhydroxyanisol (BHA), tert.-Butyl-1,4-benzoldiol (TBHQ) oder Mischungen davon umfasst.

32. Die Ölmischung nach Anspruch 27, welche weiterhin Zitronensäure in einer Konzentration von 25 bis 200 ppm enthält.

33. Die Ölmischung nach Anspruch 27, welche weiterhin mindestens einen Geschmacksstoff in einer Konzentration von 0,05 bis 1,0% umfasst.

34. Die Ölmischung nach Anspruch 27, worin die Ölmischung bei Raumtemperatur für mindestens 4 Monate haltbar ist.

35. Die Ölmischung nach Anspruch 27, worin das Trägeröl eine Palmölmischung, Palmkernöl, Kokosnussöl, Schweinefett, Rindertalg, teilhydriertes Sojabohnenöl, teilhydriertes Rapsöl, teilhydriertes Sonnenblumenöl, teilhydriertes Baumwollsamenöl, hydriertes Sojabohnenöl, hydriertes Rapsöl, hydriertes Sonnenblumenöl, hydriertes Baumwollsamenöl, interesterifiziertes teilhydriertes Sojabohnenöl, interesterifiziertes teilhydriertes Rapsöl, interesterifiziertes teilhydriertes Sonnenblumenöl, interesterifiziertes teilhydriertes Baumwollsamenöl, interesterifiziertes hydriertes Sojabohnenöl, interesterifiziertes hydriertes Rapsöl, interesterifiziertes hydriertes Sonnenblumenöl, interesterifiziertes hydriertes Baumwollsamenöl umfasst.

## Revendications

1. Procédé d'application d'une huile marine à un produit alimentaire, qui comprend les étapes consistant à:
a) faire fondre une huile véhicule, ladite huile véhicule ayant une teneur en graisses solides à 5 20°C égale ou supérieure à 40%;
b) ajouter une huile marine comprenant du DHA et un antioxydant à l'huile véhicule fondue pour former un mélange huileux; et
c) appliquer localement le mélange huileux à une denrée alimentaire prête à la consommation.

2. Procédé selon la revendication 1, où l'étape a) comprend la fonte d'une huile véhicule dont la teneur en graisses solides à 20°C est égale ou supérieure à 50%.

3. Procédé selon la revendication 1, où l'étape b) comprend l'addition, à l'huile véhicule fondue, de l'huile marine à un taux compris entre 2 et 20%.

4. Procédé selon la revendication 3, où l'étape b) comprend l'addition, à l'huile véhicule fondue, de l'huile marine à un taux compris entre 5 et 15%.

5. Procédé selon la revendication 1, où l'étape b) comprend l'addition, à l'huile véhicule fondue, de l'antioxydant à un taux compris entre 0,005 et 1,0%.

6. Procédé selon la revendication 1, où l'étape b) comprend également l'addition, à l'huile véhicule fondue, d'acide citrique à un taux compris entre 25 et 200 ppm sur la base du mélange huileux.

7. Procédé selon la revendication 1, où l'étape b) comprend également l'addition, à l'huile véhicule fondue, d'un aromatisant à un taux compris entre 0,05 et 1,0% du poids de la denrée alimentaire.

8. Procédé selon la revendication 1, où l'étape c) comprend l'application locale du mélange huileux à une denrée alimentaire prête à la consommation correspondant à une au moins des suivantes: céréale, céréale prête à la consommation, barre de céréale, cookie, biscuit salé, pâtisserie, pâtisserie à griller, gaufre, crêpe, denrée cuite au four ou produit de collation.

9. Procédé selon la revendication 1, où l'étape c) comprend l'application locale de 15 à 100 milligrammes de DHA par portion de la denrée alimentaire.

10. Procédé selon la revendication 9, où l'étape c) comprend l'application locale de 20 à 80 milligrammes de DHA par portion de la denrée alimentaire.

11. Procédé selon la revendication 1, où l'étape c) comprend l'application locale du mélange huileux en pulvérisation, en fontaine, en enrobage ou en trempé.

12. Procédé selon la revendication 1, où l'étape a) comprend la fonte d'une huile véhicule qui comprend un mélange d'huile de palme, de l'huile de palmiste, de l'huile de coco, du lard, du suif de boeuf, de l'huile de soja partiellement hydrogénée, de l'huile de colza partiellement hydrogénée, de l'huile de tournesol partiellement hydrogénée, de l'huile de coton partiellement hydrogénée, de l'huile de soja hydrogénée, de l'huile de colza hydrogénée, de l'huile de tournesol hydrogénée, de l'huile de coton hydrogénée, de l'huile de soja interestérifiée partiellement hydrogénée, de l'huile de colza interestérifiée partiellement hydrogénée, de l'huile de tournesol interestérifiée partiellement hydrogénée, de l'huile de coton interestérifiée partiellement hydrogénée, de l'huile de soja interestérifiée hydrogénée, de l'huile de colza interestérifiée hydrogénée, de l'huile de tournesol interestérifiée hydrogénée, de l'huile de coton interestérifiée hydrogénée ou des mélanges de ceux-ci.

13. Procédé selon la revendication 1, où l'étape b) comprend l'addition d'un antioxydant qui comprend un au moins des suivants: tocophérol, romarin, acide ascorbique, palmitate d'ascorbyle, hydroxytoluène butylé (BHT), hydroxyanisol butylé (BHA), tert-butyl-1,4-benzènediol (TBHQ) ou mélanges de ceux-ci.

14. Denrée alimentaire préparée conformément au procédé selon la revendication 1.

15. Denrée alimentaire prête à la consommation qui comprend une application localisée d'un mélange huileux, où ledit mélange huileux comprend une huile véhicule dont la teneur en graisses solides à 20°C est égale ou supérieure à 40%, une huile marine contenant du DHA et un antioxydant.

16. Denrée alimentaire prête à la consommation selon la revendication 15, où la teneur en graisses solides de l'huile véhicule à 20°C est égale ou supérieure à 50%.

17. Denrée alimentaire prête à la consommation selon la revendication 15, où l'huile véhicule comprend un mélange d'huile de palme, de l'huile de palmiste, de l'huile de coco, du lard, du suif de boeuf, de l'huile de soja partiellement hydrogénée, de l'huile de colza partiellement hydrogénée, de l'huile de tournesol partiellement hydrogénée, de l'huile de coton partiellement hydrogénée, de l'huile de soja hydrogénée, de l'huile de colza hydrogénée, de l'huile de tournesol hydrogénée, de l'huile de coton hydrogénée, de l'huile de soja interestérifiée partiellement hydrogénée, de l'huile de colza interestérifiée partiellement hydrogénée, de l'huile de tournesol interestérifiée partiellement hydrogénée, de l'huile de coton interestérifiée partiellement hydrogénée, de l'huile de soja interestérifiée hydrogénée, de l'huile de colza interestérifiée hydrogénée, de l'huile de tournesol interestérifiée hydrogénée, de l'huile de coton interestérifiée hydrogénée ou des mélanges de ceux-ci.

18. Denrée alimentaire prête à la consommation selon la revendication 15, où l'huile marine est présente dans le mélange huileux à un taux compris entre 2 et 20%.

19. Denrée alimentaire prête à la consommation selon la revendication 18, où l'huile marine est présente dans le mélange huileux à un taux compris entre 5 et 15%.

20. Denrée alimentaire prête à la consommation selon la revendication 15, où l'antioxydant est présent dans le mélange huileux à un taux compris entre 0,005 et 1,0%.

21. Denrée alimentaire prête à la consommation selon la revendication 15, où l'antioxydant comprend un au moins des suivants: tocophérol, romarin, acide ascorbique, palmitate d'ascorbyle, hydroxytoluène butylé (BHT), hydroxyanisol butylé (BHA), tert-butyl-1,4-benzènediol (TBHQ) ou mélanges de ceux-ci.

22. Denrée alimentaire prête à la consommation selon la revendication 15, où le mélange huileux contient également de 25 à 200 ppm d'acide citrique.

23. Denrée alimentaire prête à la consommation selon la revendication 15, où le mélange huileux contient également un aromatisant à 0,05 à 1,0% en poids (sur la base du poids de la denrée alimentaire).

24. Denrée alimentaire prête à la consommation selon la revendication 15, où le mélange huileux est appliqué à la denrée alimentaire à un taux suffisant pour fournir de 20 à 100 milligrammes de DHA par portion de la denrée alimentaire.

25. Denrée alimentaire prête à la consommation selon la revendication 15, où la denrée alimentaire correspond à une au moins des suivantes: céréale, céréale prête à la consommation, barre de céréale, cookie, biscuit salé, pâtisserie, pâtisserie à griller, gaufre, crêpe, denrée cuite au four ou produit de collation.

26. Denrée alimentaire prête à la consommation selon la revendication 15, où la denrée alimentaire comportant l'application localisée est stable pendant 4 mois au moins à température ambiante.

27. Mélange huileux comprenant une huile véhicule dont la teneur en graisses solides à 20°C est égale ou supérieure à 40%, une huile marine et un antioxydant.

28. Mélange huileux selon la revendication 27, où la teneur en graisses solides de l'huile véhicule est égale ou supérieure à 50%.

29. Mélange huileux selon la revendication 27, où l'huile marine est présente à un taux compris entre 2 et 20%.

30. Mélange huileux selon la revendication 27, où l'antioxydant est présent à un taux compris entre 0,005 et 1,0%.

31. Mélange huileux selon la revendication 27, où l'antioxydant comprend un au moins des suivants: tocophérol, romarin, acide ascorbique, palmitate d'ascorbyle, hydroxytoluène butylé (BHT), hydroxyanisol butylé (BHA), tert-butyl-1,4-benzènediol (TBHQ) ou mélanges de ceux-ci.

32. Mélange huileux selon la revendication 27, qui comprend également de l'acide citrique à un taux compris entre 25 et 200 ppm.

33. Mélange huileux selon la revendication 27, qui comprend également au moins un aromatisant à un taux compris entre 0,05 et 1,0%.

34. Mélange huileux selon la revendication 27, qui est stable pendant 4 mois au moins à température ambiante.

35. Mélange huileux selon la revendication 27, où l'huile véhicule comprend un mélange d'huile de palme, de l'huile de palmiste, de l'huile de coco, du lard, du suif de boeuf, de l'huile de soja partiellement hydrogénée, de l'huile de colza partiellement hydrogénée, de l'huile de tournesol partiellement hydrogénée, de l'huile de coton partiellement hydrogénée, de l'huile de soja hydrogénée, de l'huile de colza hydrogénée, de l'huile de tournesol hydrogénée, de l'huile de coton hydrogénée, de l'huile de soja interestérifiée partiellement hydrogénée, de l'huile de colza interestérifiée partiellement hydrogénée, de l'huile de tournesol interestérifiée partiellement hydrogénée, de l'huile de coton interestérifiée partiellement hydrogénée, de l'huile de soja interestérifiée hydrogénée, de l'huile de colza interestérifiée hydrogénée, de l'huile de tournesol interestérifiée hydrogénée, de l'huile de coton interestérifiée hydrogénée ou des mélanges de ceux-ci.
